## Europäisches Patentamt
## European Patent Office
## Office européen des brevets

(19)

(11) Veröffentlichungsnummer: **0 212 306 B1**

(12) **EUROPÄISCHE PATENTSCHRIFT**

(45) Veröffentlichungstag der Patentschrift: 06.03.91

(51) Int. Cl.5: **B60H 1/00**

(21) Anmeldenummer: 86110111.1

(22) Anmeldetag: 23.07.86

(54) **Heiz- und Belüftungseinrichtung für Kraftfahrzeuge.**

(30) Priorität: 16.08.85 DE 3529389

(43) Veröffentlichungstag der Anmeldung:
04.03.87 Patentblatt 87/10

(45) Bekanntmachung des Hinweises auf die
Patenterteilung:
06.03.91 Patentblatt 91/10

(84) Benannte Vertragsstaaten:
**DE FR GB IT**

(56) Entgegenhaltungen:
DE-A- 3 338 768       FR-A- 1 210 949
FR-A- 2 027 655       FR-A- 2 103 161
FR-A- 2 211 893       GB-A- 1 448 956
US-A- 3 306 177

PATENT ABSTRACTS OF JAPAN, Band 10,
Nr. 265 (M-515)[2321], 10. September 1986; &
JP-A-61 89 116 (MITSUBISHI HEAVY IND.
LTD) 07-05-1986

(73) Patentinhaber: **Adam Opel Aktiengesellschaft
Bahnhofsplatz 1 Postfach 1560
W-6090 Rüsselsheim(DE)**

(72) Erfinder: **Zimmermann, Klaus, Ing.
Am Flügelsbach 11
W-6501 Lörzweiler(DE)**

(74) Vertreter: **Bergerin, Ralf, Dipl.-Ing. et al
Adam Opel Aktiengesellschaft Bahnhofplatz
1 Postfach 17 10
W-6090 Rüsselsheim(DE)**

EP 0 212 306 B1

## Beschreibung

Die Erfindung betrifft eine Heiz- und Belüftungseinrichtung für Kraftfahrzeuge mit einem Gebläse, einem über einen Wärmetauscher führenden Warmluftkanal, einen den Wärmetauscher umgehenden Kaltluftkanal, der hinter dem Wärmetauscher von derjenigen Seite des Wärmetauschers her in einen Mischraum hinter diesen einmündet, die stromauf bezüglich der aus dem Mischraum wegströmenden Luft liegt.

Eine solche Anordnung ist aus der FR-A-2 027 655 bekannt. Dabei ist das Gebläse hinter dem Wärmetauscher angeordnet als sogenannter "Sucker". Durch die dadurch konstruktionsbedingte Ausgestaltung ist es bei einem solchen System nicht möglich, z. B. unterschiedlich temperierte Luft an gewünschte verschiedene Ausströmdüsen zu liefern. Entweder werden alle Düsen mit Frischluft beschickt oder alle Düsen werden von der gleich temperierten Mischluft angeströmt.

Bei Heiz- und Belüftungseinrichtungen für Kraftfahrzeuge ist man bestrebt, eine Temperaturschichtung zu erhalten, derart, daß der Kopfraum eine niedrigere Temperatur aufweist als der Fußraum. Hierzu ist ein sehr hoher Entwicklungsaufwand erforderlich, da bei gewissen Betriebszuständen der Heizung der Fall eintreten kann, daß die Temperaturregelkurven für den Fußraum und den Kopfraum zu weit auseinander liegen, d. h. daß der Kopfraum zu kühl, insbesondere für die Scheibenentfrostung, und der Fußraum zu warm ist. Der erforderliche Zeitaufwand zur empirischen Ermittlung der Maßnahmen zum Mischen der warmen und kalten Luft durch Festlegung von Strömungsquerschnitten und Gehäuseformänderungen sowie die Vorsehung von Luftleitstegen läßt sich nicht exakt vorausbestim men, wodurch die Zeit- und Kostenplanung sehr erschwert wird. Die Hauptursachen für den hohen Zeitaufwand zur Entwicklung der richtigen Temperaturverteilung sind darin zu sehen, daß die Mischkammer aus Platzgründen zu klein ist oder gänzlich fehlt, und daß die für die Belüftung notwendigen hohen Luftdurchsätze einen sehr großen Kaltluft-Bypass erfordern.

Der Erfindung liegt die Aufgabe zugrunde, eine Heiz- und Belüftungseinrichtung der eingangs gekennzeichneten Art zu schaffen, bei der diese Nachteile vermieden werden, d. h. bei der es in einfacher Weise möglich ist, in kurzer Zeit die gewünschte Temperaturverteilung und die gewünschten Temperaturregelkurven zu erhalten.

Dies wird erfindungsgemäß dadurch erreicht, daß ein an den Mischraum hinter dem Wärmetauscher anschließender Verteilraum, von dem aus Leitungen zu den Defrosterdüsen, zu Belüftungsdüsen und zum Fußraum führen, in an sich bekannter Weise unmittelbar mit dem Gebläse über eine Öffnung in Verbindung steht, die von einer Klappe über den gesamten Temperaturregelbereich geschlossen und nur bei geschlossener Regelklappe für den Warmluftkanal geöffnet ist.

Die Erfindung schlägt ferner vor, daß das sich durch den Querschnitt der von der Klappe abzuschließenden Öffnung sich ergebende Frischluftvolumen größer ist als das sich durch den freien Querschnitt von Kaltluftkanal und Wärmetauscher sich ergebende zur Erzeugung der Mischluft erforderliche Luftvolumen. Zweckmäßig schließt die Klappe in der Öffnungsstellung den Mischraum ab.

Der Kaltluftkanal, der zur Erzeugung der Mischluft dient, verläuft zweckmäßig seitlich außerhalb der Seitenwand des Wärmetauschers. Er kann jedoch auch in zwei getrennten Kanälen an den seitlichen Enden der beiden Stirnflächen des Wärmetauschers verlaufen. Neben dem Kalt luftkanal zur Erzeugung der Mischluft und der direkten Verbindung zwischen dem Gebläse und dem verteil raum, von dem aus Leitungen zu den Defroster-Düsen und zum Fußraum führen, kann ein weiterer Kaltluftkanal für die Belüftung durch Luftleitdüsen vorgesehen sein.

Eine vorteilhafte Ausbildung der Heizeinrichtung, insbesondere im Hinblick auf ihren Raumbedarf und ihre Unterbringung ergibt sich dann, wenn der Wärmetauscher eine waagerechte oder schwach geneigte Lage einnimmt und die Frischluft von oben her in diesen einströmt, während der Kaltluftkanal seitlich um den Wärmetauscher herum verläuft.

Die Erfindung wird anhand von Ausführungsbeispielen näher erläutert. In der Zeichnung zeigt

Fig. 1     einen Schnitt durch eine Heiz- und Belüftungseinrichtung mit einer Klappenstellung zur Erzeugung von Mischluft,

Fig. 2     einen Schnitt wie in Fig. 1 mit anderer Ausbildung des Kaltluft-Bypasses,

Fig. 3     einen Schnitt nach Linie III - III in Fig, 2 und

Fig. 4     einen weiteren Schnitt mit einer anderen Ausbildung der Regelklappe für den Warm- und Kaltluft-Bypass.

Von dem Gebläse 2 gelangt Frischluft in Richtung der weißen Pfeile in das Heizungsgehäuse 4. Durch eine Regelklappe 6 kann der Eintritt der Frischluft in den Warmluftkanal 8 und den Wärmetauscher 10 geregelt werden. Eine weitere Klappe 12, die mit der Regelklappe 6 bewegungsabhängig gekoppelt sein kann, regelt den Eintritt der Frischluft in den Kaltluftkanal 14. Hinter dem Wärmetauscher 10 befindet sich ein mischraum 16, in den nicht nur die durch den Wärmetauscher 10 strömende Luft einmündet, sondern auch die Luft, die durch den Kaltluftkanal 14 strömt. Der Kaltluftkanal 14 mündet an der Stelle in den mischraum 16 ein, die der Luftströmung im mischraum 16 entgegengerichtet ist. Der Kaltluftkanal 14 verläuft also seitlich außerhalb der Seitenwand 18 des Wärmetauschers 10. Der Kaltluftkanal 14 mündet an der Seite in den mischraum 16, die der durch den Pfeil 20 angezeigten Bewegungsrichtung der Luft entgegengesetzt liegt. In de mischraum 16 sind Stege 22 vorgesehen, die zur Verwirbelung, d.h. zur Vermischung von Warm- und Kaltluft dienen.

Außerhalb des Mischraumes 16 unterhalb des Wärmetauschers 10 befindet sich seitlich und oberhalb des Wärmetauschers 10 ein Verteilraum 24, von dem aus die Leitung 26 zu den Defroster-Düsen und eine Öffnung 28 für den Auslaß zum Fußraum abzweigt. Eine dargestellte Luftleitdüse 30 befindet sich zweckmäßig an jeder Seite des Armaturenbrettes und kann zur Entfrostung der Seitenscheiben dienen. Von diesem verteilraum 24 mündet ferner ein Auslaß 32 in eine Belüftungsdüse 34, die von einem Kaltluftkanal 36 beschickt wird.

Durch diese Anordnung wird erzielt, daß das Temperaturgefälle zwischen Kopfraum und Fußraum nicht zu groß wird. Sie geht vielmehr zunächst davon aus, gleiche Temeratur für Fuß- und Kopfraum zu erhalten. Zur Erfüllung der Forderung eines kühleren Kopfraumes kann nun Kaltluft durch die Belüftungsdüsen dem Kopfraum zugeführt werden. Dies ist beherrschbar und bringt nicht die Gefahr, daß das Temperaturgefälle zwischen Kopfraum und Fußraum zu groß wird. Außerdem kann durch Anordnung von Luftleitblechen in der Luftströmung und durch Ausbildung der Strömungskanäle erreicht werden, daß auch bei dieser Ausbildung dem Fußraum wärmere Luft als dem Kopfraum zugeführt wird.

Zur Erzeugung der Mischluft wird nur eine be-grenzte Frischluftmenge herangezogen. Diese wür-de aber nicht ausreichen, um eine genügende Durchlüftung des Fahrzeuginnenraums bei hohen Außentemperaturen zu erhalten. Zu diesem Zwek-ke wird für die Belüftung vorgesehen, daß der verteilraum 24 unmittelbar mit dem Gebläse verbunden werden kann, und zwar dann, wenn die Regelklappe 6 für den Warmluftkanal geschlossen ist. Dann kann eine Kaltluftklappe 40 geöffnet werden, die den Mischraum 16 in der geöffneten Lage 40 a abschließt. Die Öffnung der Kaltluftklappe 40 kann z.B. mittels einer Vakuumdose erfolgen. Die Kaltluftklappe 40 hält jedoch im gesamten Tempe-raturregelbereich die Verbindung zwischen Geblä-se 2 und dem verteilraum 24 geschlossen. Der Austritt der Luft aus den Düsen 34, 30 und der Auslaßöffnung 44 zum Fußraum kann durch Klappen 46, 48 und 50 geregelt werden.

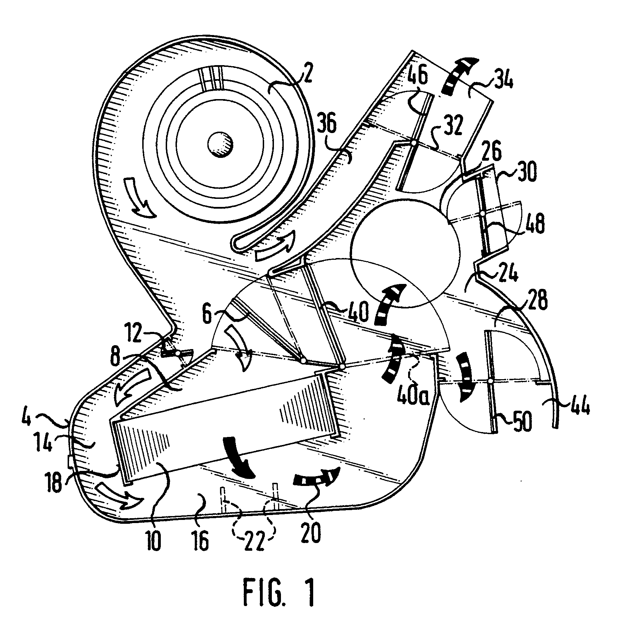

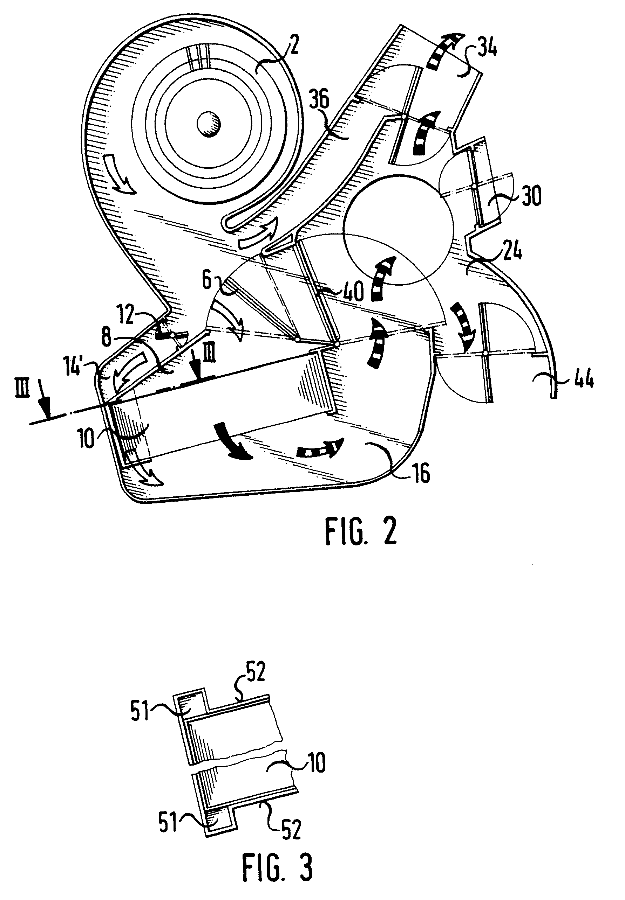

Die Anordnung nach Fig. 2 entspricht im wesentlichen der nach Fig.1. Lediglich der Kaltluftkanal 14- ist in zwei Teilkanäle 51 aufgeteilt, die seitlich an den Enden der beiden Stirnflächen 52 des Wärmetauschers 10 verlaufen. Die übrigen Teile in Fig. 2 entsprechen denen der Fig. 1 und sind mit gleichen Bezugszahlen bezeichnet.

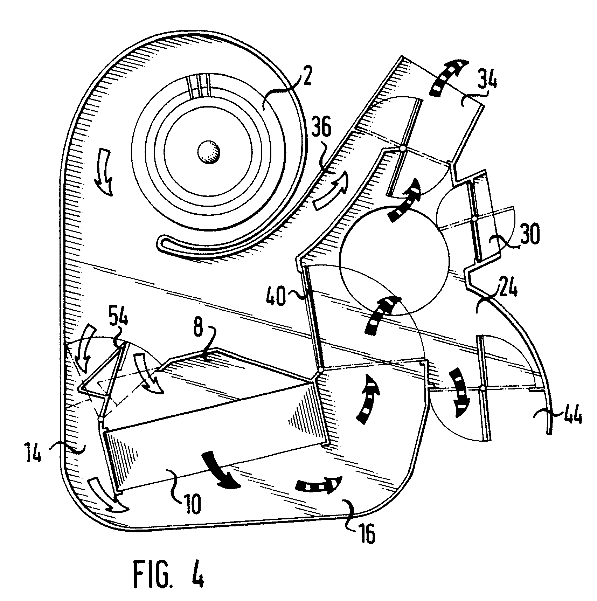

In Fig. 4 ist im Prinzip die gleiche Anordnung wie in den Fig. 1 und 2 dargestellt. Als Regelklappe für den Warmluftkanal 8 und den Kaltluftkanal 14 dient eine einzige Klappe 54, die - wie dargestellt - so ausgebildet ist, daß sie voreilend den Kaltluftkanal abschließt, d.h. den Querschnitt schon verengt, bevor noch der Warmluftkanal 8 ganz geöffnet ist. Ansonsten wirkt die Anordnung so, wie dies zur Fig. 1 beschrieben wurde.

**Ansprüche**

1. Heiz- und Belüftungseinrichtung für Kraftfahrzeuge, mit einem Gebläse (2), einem über einen Wärmetauscher (10) führenden Warmluftkanal (8), einen den Wärmetauscher (10) umgehenden Kaltluftkanal (14), der hinter dem Wärmetauscher (10) von derjenigen Seite des Wärmetauschers (10) her in einen Mischraum (16) hinter diesen einmündet, die stromauf bezüglich der aus dem Mischraum (16) wegströmenden Luft liegt,
   **dadurch gekennzeichnet,**
   daß ein an den Mischraum (16) hinter dem Wärmetauscher (10) anschließender Verteilraum (24), von dem aus Leitungen (26, 44) zu den Defrosterdüsen, zu Belüftungsdüsen und zum Fußraum führen, in an sich bekannter Weise unmittelbar mit dem Gebläse (2) über eine Öffnung in Verbindung steht, die von einer Klappe (40) über den gesamten Temperaturregelbereich geschlossen und nur bei geschlossener Regelklappe (6) für den Warmluftkanal (8) geöffnet ist.

2. Einrichtung nach Anspruch 1,
   **dndurch gekennseichnet,**
   daß das durch den Querschnitt der von der Klappe (40) abzuschließenden Öffnung sich ergebende Frischluftvolumen größer ist als das sich durch den freien Querschnitt von Kaltluftkanal (14) und Wärmetauscher (10) sich ergebende, zur Erzeugung der Mischluft erforderliche Luftvolumen.

3. Einrichtung nach Anspruch 1 und 2,
   **dadurch gekennzeichnet,**
   daß die Klappe (40) in der Öffnungsstellung den Mischraum (16) abschließt.

4. Einrichtung nach Anspruch 1 bis 3,
   **dadurch gekennseichnet,**

daß ein weiterer Kaltluftkanal (36) für die Belüftung durch Luftleitdüsen (34) vorgesehen ist.

5. Einrichtung nach Anspruch 1 bis 4,
**dadurch gekennzeichnet,**
daß in dem Mischraum (16) hinter dem Wärmetauscher (10) Stege (22) zur Vermischung der Luftströme angeordnet sind.

6. Einrichtung nach Anspruch 1 bis 5,
**dadurch gekennzeichnet,**
daß der Kaltluftkanal (14) in an sich bekannter Weise mit einer Klappe (12) versehen ist, die mit der Regelklappe (6) für den Warmluftkanal (8) bewegungsabhängig gekoppelt ist.

7. Einrichtung nach Anspruch 1 bis 6,
**dadurch gekennzeichnet,**
daß für den Kaltluftkanal (14) und für den Warmluftkanal (8) eine einzige Regelklappe (54) vorgesehen ist.

8. Einrichtung nach einem oder mehreren der vorhergehenden Ansprüche,
**dadurch gekennzeichnet,**
daß der Wärmetauscher (10) eine waagerechte oder schwach geneigte Lage einnimmt und die Frischluft von oben her in diesen einströmt, während der Kaltluftkanal (14) seitlich um den Wärmetauscher (10) herum verläuft.

## Claims

1. Heating and ventilating device for motor vehicles with a blower (2), a warm air duct (8) leading over a heat exchanger (10), a cold air duct (14) leading around the heat exchanger (10), which cold air duct leads into a mixing chamber (16) behind the heat exchanger (10) from that side of the heat exchanger (10) which lies upstream in relation to the air flowing away from the mixing chamber (16),
**characterised**
in that connected to the mixing chamber (16) behind the heat exchanger (10) is a distribution chamber (24), from which pipes (26, 44) lead to the defroster nozzles, to ventilating nozzles and to the leg room, to which distribution chamber (24) is directly connected in a known manner the blower (2) via an opening which is closed by a flap (40) over the entire temperature control range and is opened to the warm air duct (8) only when the control flap (6) is closed.

2. Device according to claim 1,
**characterised**

in that the volume of fresh air resulting from the cross-section of the opening to be closed by the flap (40) is greater than the volume of air required for producing the air mixture resulting from the open cross-section of the cold air duct (14) and the heat exchanger (10).

3. Device according to claim 1 and 2,
**characterised**
in that the flap (40) closes the mixing chamber (16) in the open position.

4. Device according to claim 1 to 3,
**characterised**
in that a further cold air duct (36) is provided for the ventilation through air conducting nozzles (34).

5. Device according to claim 1 to 4,
**characterised**
in that in the mixing chamber (16) behind the heat exchanger (10) there are arranged webs (22) for mixing the air streams.

6. Device according to claim 1 to 5,
**characterised,**
in that the cold air duct (14) is provided in a known manner with a flap (12) which is coupled for movement to the control flap (6) of the warm air duct (8).

7. Device according to claim 1 to 6,
**characterised**
in that one single control flap (54) is provided for the cold air duct (14) and the warm air duct (8).

8. Device according to one or more of the aforementioned claims, **characterised**
in that the heat exchanger (10) takes up a horizontal or slightly inclined position and the fresh air flows into this from above, while the cold air duct (14) runs laterally round the heat exchanger (10).

## Revendications

1. Dispositif de chauffage et de ventilation pour véhicules automobiles, comprenant un ventilateur (2), un conduit d'air chaud (8) passant par un échangeur de chaleur (10), un conduit d'air froid (14) contournant l'échangeur de chaleur (10), et qui débouche, derrière l'échangeur de chaleur (10), dans une chambre de mélange (16) placée derrière ledit échangeur, vu de la face de l'échangeur (10) qui est située en amont par rapport à l'air sortant de la chambre de mélange (16), caractérisé en ce qu'une chambre de répartition (24) raccordée à la chambre de mélange (16) derrière l'échangeur de chaleur (10), à partir de laquelle des conduites (26, 44) conduisent aux buses de dégivrage, aux buses de ventilation et vers les pieds, est reliée directement à un ventilateur (2), d'une manière connue en soi, par l'intermédiaire d'une ouverture qui est fermée par un volet (40) sur l'ensemble de la plage de régulation de température et qui est ouverte uniquement lorsque le volet de régulation (6) pour le conduit d'air chaud (8) est fermé.

2. Dispositif selon la revendication 1, caractérisé en ce que le volume d'air frais résultant de la section de l'ouverture obturée par le volet (40) est supérieur au volume d'air nécessaire à la production de l'air mélangé résultant de la section libre du conduit d'air froid (14) et de l'échangeur de chaleur (10).

3. Dispositif selon les revendications 1 et 2, caractérisé en ce que le volet (40) ferme la chambre de mélange (16) lorsqu'il est en position ouverte.

4. Dispositif selon les revendications 1 à 3, caractérisé en ce qu'il est prévu un conduit d'air froid (36) supplémentaire pour la ventilation par l'intermédiaire de buses directrices (34).

5. Dispositif selon les revendications 1 à 4, caractérisé en ce que des ailettes (22) sont disposées à l'intérieur de la chambre de mélange (16) derrière l'échangeur de chaleur (10) pour mélanger les flux d'air.

6. Dispositif selon les revendications 1 à 5, caractérisé en ce que le conduit d'air froid (14) est muni d'une manière connue en soi d'un volet (12) couplé au niveau de ses déplacements au volet de régulation (6) du conduit d'air chaud (8).

7. Dispositif selon les revendications 1 à 6, caractérisé en ce qu'il est prévu pour le conduit d'air froid (14) et pour le conduit d'air chaud (8) un volet de régulation (54) unique.

8. Dispositif selon une ou plusieurs des revendications précédentes, caractérisé en ce que l'échangeur de chaleur (10) est disposé horizontalement ou légèrement incliné et l'air frais entre par le haut dans l'échangeur, tandis que le conduit d'air froid (14) passe latéralement autour de l'échangeur (10).

FIG. 1

FIG. 2

FIG. 3

FIG. 4